# EUROPEAN PATENT SPECIFICATION

(11) **EP 2 869 979 B1**
(45) Date of publication and mention of the grant of the patent: **07.12.2016**
(21) Application number: 13730190.9
(22) Date of filing: 13.06.2013
(51) Int. Cl.: B29C 45/26, B29C 45/14, B29C 45/16

(54) **CONTINUOUS TWO-STEP INJECTION MOULDING OF ASSEMBLIES WITH MOVABLE ELEMENTS**
VERFAHREN ZUM HERSTELLEN EINER EINHEIT MIT BEWEGLICHEN TEILEN IM ZWEISCHRITT SPRITZGUSS
PROCÉDÉ DE MOULAGE PAR INJECTION EN DEUX ÉTAPES POUR LA FABRICATION D'UNE ENTITÉ AVEC DES PARTIES MOBILES

(30) Priority: 04.07.2012 DE 102012013224
(43) Date of publication of application: 13.05.2015
(73) Proprietor: Faurecia Exteriors GmbH, 31655 Stadthagen (DE)
(72) Inventor: GÖRSE, Hergen, 91154 Roth (DE); THOULOUZE, Bertrand, 85080 Gaimersheim (DE); DIAZ SANCHEZ, Francisco Javier, 91785 Pleinfeld (DE); BÜCKER, Dirk, 41199 Mönchengladbach (DE); MORESSEE, Aurélien, 91781 Weißenburg in Bayern (DE)
(74) Representative: Lavoix
(86) International application number: PCT/EP2013/062301
(87) International publication number: WO 2014/005819

(56) References cited:
- EP-A2- 1 447 603
- DE-A1- 19 615 438
- DE-A1-102004 003 464
- GB-A- 2 346 341
- US-A- 5 340 357
- US-A1- 2006 138 697
- US-B1- 6 451 238

## Description

The present invention relates to a method of injection moulding assemblies comprising a carrier with a bearing member and a movable element movably mounted, in particular pivotally mounted, with respect to the carrier via the bearing member. Such a method is known from DE 101 37 771 A1. More precisely, this document teaches the manufacture of an integral combustion engine throttling valve by two component off-tool plastic injection moulding. The resulting throttling valve has a throttle that is rotatably mounted with respect to a frame.

However, two component injection moulding as taught by DE 101 37 771 A1 needs dedicated machines and involves two different plastic components. Accordingly, this manufacturing method is expensive.

US 5,340,357 relates to an air-conditioning blow-out port unit and process for manufacturing the same.

US 6,451,238 pertains to a process for producing an intake member made of resin, and the corresponding resin intake member.

EP 1 447 603 A2 relates to a throttle butterfly valve and its production method.

DE 10 2004 003464 A1 pertains to a method for producing a throttle valve unit having increased tightness.

US 2006 138 697 A1 relates to a method for producing a throttle valve unit in a two-component injection moulding process.

It is therefore an object of the present invention to provide an improved and cheaper method of injection moulding assemblies with movable parts.

According to the invention, this object is achieved with the method of claim 1.

Preferred embodiments are detailed in the dependent claims.

The invention will now be explained in detail with reference to the drawings, wherein:
Figure 1 is a perspective view of an assembly according to the invention, namely an automotive grille shutter;
Figure 2 is a longitudinal sectional detail according to arrows II of figure 1 of one bearing area of the automotive grille shutter of figure 1;
Figure 3 is a cross-sectional view of an injection-mould according to the invention;
Figure 4 is a top plan view according to arrows IV of figure 3 of the lower half of the inventive injection-mould; and
Figure 5 is a detail showing the form-fitting sealing of one grille shutter bearing member during injection-moulding.

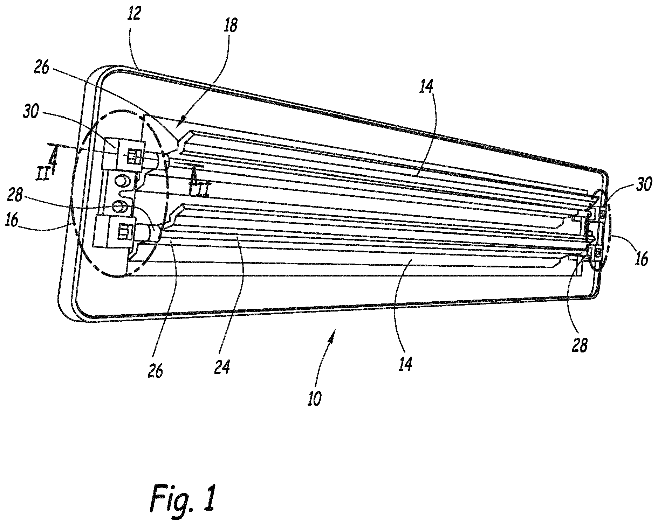

Figure 1 shows an assembly 10, that is an automotive grille shutter. This grille shutter is part of the front end module of a motor vehicle. More precisely, in operation, the grille shutter is mounted on the front end carrier of the front end module and regulates the flow of cooling air to the motor vehicle's engine.

The grille shutter 10 includes a carrier 12, namely a frame, and two movable elements 14, namely two air flaps. The frame 12 comprises two bearing areas 16 on opposite sides on which the air flaps 14 are pivotally mounted. The frame 12 has a rectangular shape and an opening 18, which accommodates the two air flaps 14. Preferably, frame 12 is provided with one or several stiffening ribs (not shown).

Each air flap 14 has an undulated cross-section and a generally rectangular shape. Preferably, each air flap 14 is provided with one or several fastening ribs (not shown) for connecting e.g. an air flap driving assembly. Each air flap 14 comprises a central pivoting shaft 24 and two fins 26 extending in opposite directions from the pivoting shaft 24. Two journals 28 form the opposite ends of each pivoting shaft 24. The journals 28 are located in the bearing areas 16 of frame 12.

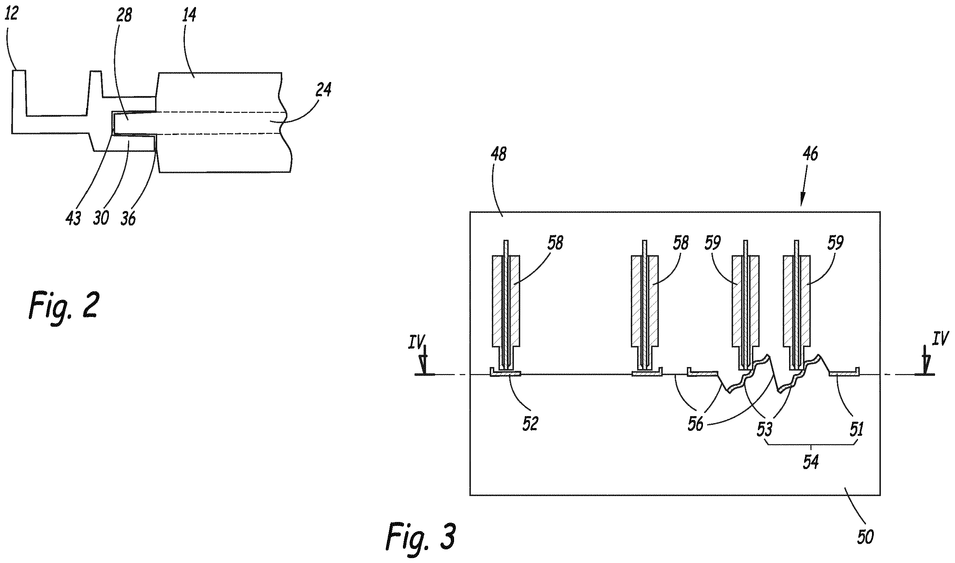

Each bearing area 16 is provided with two bearing members 30, one of which is shown in detail in figure 2. Preferably, each bearing member 30 is an integral plastic member, preferably made of stabilised polyamide 6 or long glass fibre reinforced polypropylene. Each bearing member 30 comprises a bearing cavity 43.

As shown in figure 2, the journals 28 of the pivoting shafts 24 are inserted into the bearing cavities 43.

With reference to figure 3, there is shown an injection-mould 46 for manufacturing the grille shutter 10 of figure 1. Mould 46 comprises an upper mould half 48 and a lower mould half 50. Both mould halves are complementary. They can be separated and joined together. In the joined state, the mould halves 48, 50 define a carrier or frame forming cavity 52 and an assembly forming cavity 54. The assembly forming cavity 54 comprises a formed frame accommodating cavity 51 and two movable element forming cavities 53. The forming and accommodating cavities 51, 52, 53 are separated from each other by sealing borders 56. At least one separate and independent injection nozzle 58, 59, preferably a needle valve hot runner nozzle, is provided for each forming cavity 52, 53. In the shown example, two frame forming injection nozzles 58 are provided for the frame forming cavity 52. The use of two frame forming injection nozzles 58 leads to a more homogeneous distribution of the molten plastic material in frame forming cavity 52 during moulding. One air flap forming injection nozzle 59 is associated with each air flap forming cavity 53.

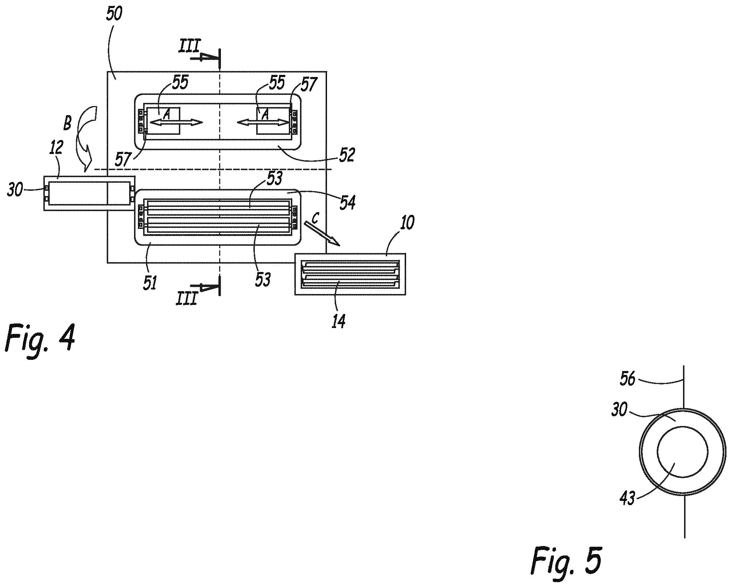

Figure 4 is a top plan view of the lower mould half 50. Two bearing member forming devices, namely two reciprocating carriages 55, each with two bearing member forming studs 57, are arranged in lower mould half 50. More precisely, the carriages 55 are surrounded by the frame forming cavity 52.

The manufacturing of the grille shutter 10 using the injection-mould 46 will now be described with reference to figures 3 to 5.

Firstly, the two mould halves 48 and 50 are joined. Then, the frame forming injection nozzles 58 are operated such that molten plastic material, such as long glass fibre reinforced polypropylene, flows into frame forming cavity 52. Concurrently, carriages 55 are moved from a retracted inoperative position to an extended bearing member forming position (cf. arrows A in figure 4). Accordingly, a first frame 12 is moulded with four bearing members 30. Each bearing member 30 has a bearing cavity 43 generated by a corresponding bearing member forming stud 57. When the plastic injection is finished, the two mould halves 48, 50 are separated.

After expiration of a predetermined cooling period, the formed first frame 12 has cooled off and a handling robot moves the same to the assembly forming cavity 54, placing it into the formed frame accommodating cavity 51 (cf. arrow B in figure 4).

Subsequently, the two mould halves 48 and 50 are again joined. In this state, as shown in figure 5, the sealing borders 56 surround the bearing cavities 43 in a form-fitting manner. All injection nozzles 58, 59 are then simultaneously operated. A second frame is injection-moulded in the frame forming cavity 52 in the same manner as the first frame. At the same time, two air flaps 14 are injection-moulded into the formed first frame 12 by filling the two air flap forming cavities 53 with molten plastic material. The injected plastic material also flows into the bearing cavities 43 of bearing members 30, thereby forming the journals 28 of the air flaps 14. Thanks to the sealing borders 56, the air flap forming cavities 53 are isolated from each other and the bearing cavities 43 are sealed off. Hence, any fusion between the two air flaps or between the journals 28 and the bearing members 30 is prevented.

The plastic material injected into forming cavities 52, 53 is the same identical component. The injection nozzles 58, 59 are connected to a single molten plastic source.

When the second plastic injection is finished, the two mould halves 48, 50 are separated. The handling robot grabs the formed second frame and the finished automotive grille shutter 10, placing the former into the formed frame accommodating cavity 51 and removing the latter from the assembly forming cavity 54 (cf. arrow C in figure 4). The finished automotive grille shutter 10 is carried away and the whole process starts again.

With the just described injection moulding process, one obtains automotive grille shutters wherein the air flaps 14 are securely connected to frame 12 while being freely pivotable. No further mounting steps are needed.

If desired, during the injection of the molten plastic material the air flaps 14 may be formed with fastening ribs, and/or the frame 12 with stiffening ribs.

The inventive method is economical in particular because of the use of one type of plastic material for injection moulding of the frame 12 and the air flaps 14.

## Claims

1. A method of injection moulding assemblies (10) comprising a carrier (12) with a bearing member (30) and a movable element (14) movably mounted, in particular pivotally mounted, with respect to the carrier (12) via the bearing member (30), the method comprising the successive steps of:
a) providing an injection mould (46) with a carrier forming cavity (52), an assembly forming cavity (54) comprising a formed carrier accommodating cavity (51) and a movable element forming cavity (53) separated by a sealing border (56), and a bearing member forming device (55);
b) injecting plastic material into the carrier forming cavity (52) thereby forming a first carrier (12), while forming a first bearing member (30) comprising a bearing cavity (43) into the first carrier (12) using the bearing member forming device (55);
c) moving the formed first carrier (12) from the carrier forming cavity (52) to the formed carrier accommodating cavity (51), preferably with a handling robot; and
d) injecting plastic material into the movable element forming cavity (53) thereby forming a first movable element (14) inside the first carrier (12) and thus a finished first assembly (10),
wherein, during step d), said sealing border (56) surrounds the bearing cavity (43) in a form-fitting manner.

2. The method of claim 1, further comprising the step of waiting for the formed first carrier (12) to cool off prior to moving the same to the assembly forming cavity (54).

3. The method of any one of the previous claims, further comprising, concurrently to step d), the step of injecting plastic material into the carrier forming cavity (52) thereby forming a second carrier, while forming a second bearing member into the second carrier using the bearing member forming device (55).

4. The method of any one of the previous claims, wherein the bearing member forming device (55) moves during step b) from a retracted inoperative position to an extended bearing member forming position and back to the retracted inoperative position.

5. The method of any one of the previous claims, wherein the bearing member forming device (55) comprises a reciprocating carriage with a bearing member forming stud (57).

6. The method of any one of the previous claims, wherein each movable element (14) comprises a journal (28) that is injection moulded into the corresponding bearing cavity (43) during step d).

7. The method of any one of the previous claims, wherein a separate and independent injection nozzle (58, 59) is associated with each of the carrier forming cavity (52) and the assembly forming cavity (54), such as a needle valve hot runner nozzle.

8. The method of any one of the previous claims, wherein all injection steps are carried out with the same plastic material, preferably long glass fibre reinforced polypropylene.

9. The method of any one of the previous claims, comprising the forming of at least one fastening rib onto the movable element (14), by the injection of the plastic material.

10. The method of any one of the previous claims, comprising the forming of at least one stiffening rib onto the carrier (12), by the injection of the plastic material.

11. The method of any one of the previous claims, wherein the carrier is a frame (12), the movable element is an air flap (14), and the assembly is an automotive grille shutter (10).

## Patentansprüche

1. Verfahren zum Spritzgießen von Einheiten (10), umfassend einen Träger (12) mit einem Lagerelement (30) und einem beweglichen Element (14), das beweglich, insbesondere schwenkbar, mit Bezug auf den Träger (12) über das Lagerelement (30) montiert ist, wobei das Verfahren die folgenden sukzessiven Schritte umfasst:
a) Bereitstellen einer Spritzgussform (46) mit einem Träger bildenden Hohlraum (52), einem eine Einheit bildenden Hohlraum (54), umfassend einen gebildeten Träger aufnehmenden Hohlraum (51) und ein ein bewegliches Element bildenden Hohlraum (53), getrennt durch einen Dichtungsrand (56), und eine Lagerelement bildende Vorrichtung (55);
b) Einspritzen von Kunststoffmaterial in den Träger bildenden Hohlraum (52), dadurch Bilden eines ersten Trägers (12), während ein erstes Lagerelement (30) gebildet wird, umfassend einen Lagerungshohlraum (43), in den ersten Träger (12) unter Verwendung der Lagerelement bildenden Vorrichtung (55);
c) Bewegen des geformten ersten Trägers (12) aus dem Träger bildenden Hohlraum (52) in den gebildeten Träger aufnehmenden Hohlraum (51), vorzugsweise mit einem Handhabungsroboter; und
d) Einspritzen von Kunststoffmaterial in den beweglichen Element bildenden Hohlraum (53), dadurch Bilden eines ersten beweglichen Elements (14) innerhalb des ersten Trägers (12) und somit einer fertigen ersten Einheit (10),
wobei während des Schritts d) der Dichtungsrand (56) auf eine formschlüssige Weise den Lagerungshohlraum (43) umgibt.

2. Verfahren nach Anspruch 1, weiter umfassend den Schritt des Wartens darauf, dass der gebildete erste Träger (12) abkühlt, bevor dieser in den Einheit bildenden Hohlraum (54) bewegt wird.

3. Verfahren nach einem der vorhergehenden Ansprüche, weiter umfassend, gleichzeitig mit Schritt d), den Schritt des Einspritzens von Kunststoffmaterial in den Träger bildenden Hohlraum (52), dadurch Bilden eines zweiten Trägers, während ein zweites Lagerelement in den zweiten Träger unter Verwendung der Lagerelement bildenden Vorrichtung (55) gebildet wird.

4. Verfahren nach einem der vorhergehenden Ansprüche, wobei sich die Lagerelement bildende Vorrichtung (55) während Schritt b) aus einer zurückgezogenen inoperativen Position in eine erweiterte Lagerelement bildende Position und zurück in die zurückgezogene inoperative Position bewegt.

5. Verfahren nach einem der vorhergehenden Ansprüche, wobei die Lagerelement bildende Vorrichtung (55) einen sich hin- und herbewegenden Schlitten mit einem Lagerelement bildenden Stift (57) umfasst.

6. Verfahren nach einem der vorhergehenden Ansprüche, wobei jedes bewegliche Element (14) einen Zapfen (28) umfasst, der in den entsprechenden Lagerungshohlraum (43) während Schritt d) spritzgegossen wird.

7. Verfahren nach einem der vorhergehenden Ansprüche, wobei eine getrennte und unabhängige Einspritzdüse (58, 59) mit jedem des Träger bildenden Hohlraums (52) und des Einheit bildenden Hohlraums (54) assoziiert ist, wie z.B. eine Nadelventil-Heißkanaldüse.

8. Verfahren nach einem der vorhergehenden Ansprüche, wobei alle Injektionsschritte mit dem gleichen Kunststoffmaterial, vorzugsweise einem mit langen Glasfasern verstärktem Polypropylen, durchgeführt werden.

9. Verfahren nach einem der vorhergehenden Ansprüche, umfassend das Bilden von mindestens einer Befestigungsrippe auf das bewegliche Element (14) durch das Einspritzen des Kunststoffmaterials.

10. Verfahren nach einem der vorhergehenden Ansprüche, umfassend das Bilden von mindestens einer Versteifungsrippe auf den Träger (12) durch das Einspritzen des Kunststoffmaterials.

11. Verfahren nach einem der vorhergehenden Ansprüche, wobei der Träger ein Rahmen (12) ist, das bewegliche Element eine Luftklappe (14) ist und die Einheit ein Kraftfahrzeug-Kühlergrill-Verschluss (10) ist.

## Revendications

1. Procédé pour mouler par injection des ensembles (10) comprenant un support (12) avec un élément de palier (30) et un élément mobile (14) monté de manière mobile, en particulier monté de manière pivotante par rapport au support (12) via l'élément de palier (30), le procédé comprenant les étapes successives consistant à :
a) prévoir un moule d'injection (46) avec une cavité de formation de support (52), une cavité de formation d'ensemble (54) comprenant une cavité de logement de support formé (51) et une cavité de formation d'élément mobile (53) séparée d'une bordure d'étanchéité (56), et un dispositif de formation d'élément de palier (55) ;
b) injecter une matière plastique dans la cavité de formation de support (52) formant ainsi un premier support (12), tout en formant un premier élément de palier (30) comprenant une cavité de palier (43) dans le premier support (12) en utilisant le dispositif de formation d'élément de palier (55) ;
c) déplacer le premier support formé (12) de la cavité de formation de support (52) à la cavité de logement de support formé (51), de préférence avec un robot de manipulation ; et
d) injecter une matière plastique dans la cavité de formation d'élément mobile (53) formant ainsi un premier élément mobile (14) à l'intérieur du premier support (12) et ainsi un premier ensemble fini (10),
dans lequel, pendant l'étape d), ladite bordure d'étanchéité (56) entoure la cavité de palier (43) par complémentarité de forme.

2. Procédé selon la revendication 1, comprenant en outre l'étape consistant à attendre que le premier support formé (12) refroidisse avant de déplacer ce dernier vers la cavité de formation d'ensemble (54).

3. Procédé selon l'une quelconque des revendications précédentes, comprenant en outre, simultanément à l'étape d), l'étape consistant à injecter une matière plastique dans la cavité de formation de support (52) formant ainsi un second support, tout en formant un second élément de palier dans le second support en utilisant le dispositif de formation d'élément de palier (55).

4. Procédé selon l'une quelconque des revendications précédentes, dans lequel le dispositif de formation d'élément de palier (55) se déplace pendant l'étape b) d'une position non opérationnelle rétractée à une position de formation d'élément de palier étendue et revient dans la position non opérationnelle rétractée.

5. Procédé selon l'une quelconque des revendications précédentes, dans lequel le dispositif de formation d'élément de palier (55) comprend un chariot effectuant un mouvement de va-et-vient avec une broche de formation d'élément de palier (57).

6. Procédé selon l'une quelconque des revendications précédentes, dans lequel chaque élément mobile (14) comprend un tourillon (28) qui est moulé par injection dans la cavité de palier (43) correspondante pendant l'étape d).

7. Procédé selon l'une quelconque des revendications précédentes, dans lequel une buse d'injection séparée et indépendante (58, 59) est associée avec chacune parmi la cavité de formation de support (52) et la cavité de formation d'ensemble (54), telle qu'une buse de canal chaud à clapet à aiguille.

8. Procédé selon l'une quelconque des revendications précédentes, dans lequel toutes les étapes d'injection sont réalisées avec la même matière plastique, de préférence du polypropylène renforcé en fibres de verre longues.

9. Procédé selon l'une quelconque des revendications précédentes, comprenant l'étape consistant à former au moins une nervure de fixation sur l'élément mobile (14) par l'injection de la matière plastique.

10. Procédé selon l'une quelconque des revendications précédentes, comprenant l'étape consistant à former au moins une nervure de raidissement sur le support (12), par l'injection de la matière plastique.

11. Procédé selon l'une quelconque des revendications précédentes, dans lequel le support est un cadre (12), l'élément mobile est un volet d'aération (14), et l'ensemble est un obturateur de grille automobile (10).
